# FASCICULE DE BREVET EUROPEEN

(11) **EP 3 481 784 B1**
(45) Date de publication et mention de la délivrance du brevet: **08.04.2020**
(21) Numéro de dépôt: 17742488.4
(22) Date de dépôt: 21.06.2017
(51) Int. Cl.: C03B 23/09

(54) **DISPOSITIF POUR LE FORMAGE D'UN COL SUR UN TUBE EN VERRE**
VORRICHTUNG ZUR FORMUNG EINES HALSES EINER GLASRÖHRE
DEVICE FOR FORMING A NECK ON A GLASS TUBE

(30) Priorité: 06.07.2016 FR 1656498
(43) Date de publication de la demande: 15.05.2019
(73) Titulaire: Nipro Pharmapackaging France, 76390 Aumale (FR)
(72) Inventeur: DOUARRE, Christian, 28330 AUTHON DU PERCHE (FR); LECOMTE, Thibaut, 28330 AUTHON DU PERCHE (FR)
(74) Mandataire: Demulsant, Xavier
(86) Numéro de dépôt international: PCT/FR2017/051645
(87) Numéro de publication internationale: WO 2018/007715

(56) Documents cités:
- GB-A- 802 993

## Description

L'invention a trait au domaine de la réalisation d'un col sur un récipient, et plus précisément aux dispositifs permettant le formage du col sur un tube en verre.

Le col peut présenter différentes formes, en fonction de l'utilisation envisagée du récipient. En particulier, pour la fabrication de cartouches, aussi appelées carpules, notamment utilisées en anesthésie dentaire ou pour l'injection de médicaments, par exemple de l'insuline, le récipient a couramment une forme tubulaire de section transversale circulaire et le col a une section en forme de T permettant de fixer un bouchon en caoutchouc serti par une collerette de laiton.

Les carpules sont généralement fabriquées à partir d'un tube en verre coupé à une longueur désirée.

Le col de la carpule est formé par le biais de trois étapes successives. Les trois étapes, réalisées dans l'ordre cité ci-après, sont appelées :
- étape d'ébauche, réalisée par un dispositif d'ébauche, permettant la formation d'un évasement sur le tube ;
- étape de préformage, réalisée par un dispositif de préformage, permettant la formation d'une épaule et d'un cou sur le tube ;
- étape de formage, réalisée par un dispositif de formage, permettant la formation d'une bouche régulière sur le tube en verre.

Lors de chaque étape, les tubes coupés sont chauffés, à une extrémité, à une température de ramollissement, supérieure à la température de transition vitreuse du matériau et inférieure à sa température de fusion, rendant le matériau de la carpule malléable. Un pion du dispositif, correspondant à l'étape en cours de réalisation, est disposé dans l'extrémité du tube en verre et un galet de façonnage appuie sur l'extérieur du tube, au niveau du pion, pour former, lors de l'étape d'ébauche, l'évasement du tube, lors de l'étape de préformage, l'épaule et le cou de la carpule et, lors de l'étape de formage, la bouche de la carpule.

Le document US 4441908 divulgue une machine tournante comprenant un dispositif comportant un pion, un galet avant de façonnage et un galet arrière de façonnage disposés de part et d'autre du pion. Le dispositif comprend un palpeur supérieur et un palpeur inférieur, respectivement aptes à être en contact avec une mâchoire et avec un mandrin de la machine tournante. Le palpeur supérieur et le palpeur inférieur définissent la distance, dans une direction perpendiculaire à l'axe de révolution du tube, assurant l'alignement entre le tube en verre, le pion et les galets de façonnage. Un palpeur d'indexage horizontal, prenant appui sur un chemin horizontal, écarte le galet avant de façonnage et le galet arrière de façonnage l'un de l'autre, et rapproche deux moitiés du pion l'une de l'autre. Dans le même temps, un palpeur d'indexage vertical, prenant appui sur un chemin vertical, rehausse les galets et le pion de sorte que le pion pénètre dans la carpule et que les galets sont disposés à une distance verticale prédéfinie du bord de la carpule. Le chemin horizontal a une forme permettant ensuite aux moitiés du pion de s'écarter et aux galets de se rapprocher, de sorte à venir en contact avec la carpule. Les mêmes étapes, réalisées dans l'ordre inverse, permettent ensuite de désolidariser le dispositif, c'est-à-dire le pion, le galet avant de façonnage et le galet arrière de façonnage, de la carpule.

Un tel dispositif est effectivement apte à se positionner par rapport à un produit, afin de réaliser une opération sur ce produit. Cependant, pour que les étapes décrites ci-dessus soient correctement réalisées, le positionnement du chemin horizontal, du chemin vertical et des palpeurs d'indexage les uns par rapport aux autres et par rapport à la machine tournante doit être très précis. Cette précision entraîne une complication dans la fabrication, le montage et le réglage du chemin horizontal, du chemin vertical, du dispositif et de la machine tournante.

De plus, la forme du tube en verre à l'issu de chaque étape étant différente, la forme du pion, la forme du galet de façonnage ainsi que le moment d'insertion du pion dans le tube et le moment d'appui du galet sur l'extérieur du tube sont nécessairement différents pour chacun des dispositifs.

GB802993 A fait référence à un dispositif de formage pour la réalisation d'une opération sur un produit en verre de forme tubulaire, ce dispositif comprenant :
- un support ;
- un outil de façonnage mobile en translation par rapport au support suivant une direction de travail ;
- un palpeur mobile en translation par rapport au support suivant la direction de travail, ce palpeur étant configuré pour indexer l'outil de façonnage par rapport au produit ;
- un outil d'appui muni d'un pion, d'une came et d'un galet suiveur, le galet suiveur suivant la forme de la came de telle sorte à faire varier la distance séparant le pion et l'outil de façonnage suivant une direction d'appui perpendiculaire à la direction de travail, cet outil d'appui étant configuré pour réaliser, avec l'outil de façonnage, l'opération sur le produit ;
le dispositif d'ébauche étant caractérisé en ce qu'il comprend, en outre, un moyen de transfert d'un mouvement de translation du palpeur en un mouvement de translation de l'outil de façonnage, ce moyen de transfert étant mobile par rapport à l'outil de façonnage et par rapport au palpeur, ce moyen de transfert étant en contact, en un premier point de contact, avec le palpeur et, en un deuxième point de contact, avec l'outil de façonnage, et en ce que l'outil d'appui comprend une tige d'appui.

Un premier objectif est de proposer un dispositif de formage apte à réaliser une bouche régulière sur un récipient, typiquement un récipient tubulaire en verre ou analogue, suivant une trajectoire prédéfinie.

Un deuxième objectif est de proposer un tel dispositif de formage, simple de fabrication.

Un troisième objectif est de proposer une machine comprenant un dispositif de formage répondant aux objectifs précédents, dont le montage et le réglage par rapport à la machine est simple.

A cet effet, il est proposé, en premier lieu, un dispositif de formage pour la réalisation d'une opération sur un produit de forme tubulaire en verre, ce dispositif comprenant :
- un support ;
- un outil de façonnage mobile en translation par rapport au support suivant une direction de travail ;
- un palpeur mobile en translation par rapport au support suivant la direction de travail, ce palpeur étant configuré pour indexer l'outil de façonnage par rapport au produit ;
- un outil d'appui muni d'un pion, d'une came et d'un galet suiveur, la came étant mobile en rotation autour d'un axe d'appui fixe par rapport au palpeur, le galet suiveur suivant la forme de la came de telle sorte à faire varier la distance séparant le pion et l'outil de façonnage suivant une direction d'appui perpendiculaire à la direction de travail, cet outil d'appui étant configuré pour réaliser, avec l'outil de façonnage, l'opération sur le produit ;
   ce dispositif de formage comprenant en outre un moyen de transfert d'un mouvement de translation du palpeur en un mouvement de translation de l'outil de façonnage, ce moyen de transfert étant mobile en rotation, par rapport au palpeur, autour d'un axe de transfert fixe par rapport au palpeur et étant également mobile par rapport à l'outil de façonnage, ce moyen de transfert étant en contact, en un premier point de contact confondu avec l'axe de transfert, avec le palpeur et, en un deuxième point de contact, avec l'outil de façonnage, la distance séparant le premier point de contact et le deuxième point de contact varie en fonction du déplacement du palpeur par rapport au support, cette distance étant définie par la forme du moyen de transfert.

Le dispositif est ainsi simple de fabrication et de réglage, la forme du moyen de transfert permettant, à elle seule, en fonction du déplacement du palpeur, de définir la distance séparant l'outil de façonnage et le produit.

Le dispositif est peu encombrant et fonctionne sans la présence d'une source d'énergie additionnelle.

Diverses caractéristiques supplémentaires peuvent être prévues, seules ou en combinaison :
- l'outil de façonnage comprend un galet avant de façonnage et le palpeur comprend un galet d'indexage disposé, suivant la direction de travail, entre le support et le galet avant de façonnage ;
- il définit une position avancée et une position reculée où les distances, suivant la direction de travail et suivant la direction d'appui, séparant le pion de l'outil d'appui et le galet avant de façonnage de l'outil de façonnage sont inférieures aux distances, respectivement suivant la direction de travail et suivant la direction d'appui, séparant le pion et le galet avant de façonnage lorsque le dispositif de formage est en position avancée ;
- l'outil d'appui est mobile en translation suivant la direction d'appui par rapport au palpeur ;
- il comprend un vérin solidaire du palpeur et de la came de l'outil d'appui, le vérin étant configuré pour mettre en mouvement la came en fonction du déplacement du palpeur par rapport au support ;
- l'outil de façonnage comprend un galet arrière de façonnage mobile en translation par rapport au galet avant de façonnage suivant la direction de travail, le galet arrière de façonnage est disposé, suivant la direction de travail, à l'opposé du galet avant de façonnage par rapport au pion de l'outil d'appui ;
- le moyen de transfert comprend :
   - une première branche apte à être en contact avec le galet avant de façonnage de l'outil de façonnage au niveau du deuxième point de contact ;
   - une deuxième branche apte à être en contact avec le galet arrière de façonnage de l'outil de façonnage au niveau d'un troisième point de contact ;
   - une troisième branche apte à être en contact avec un premier chemin du support au niveau d'un quatrième point de contact ; la première branche comprend une partie oblique définissant un angle confondu avec le deuxième point de contact, la partie oblique est apte à être en contact avec un deuxième chemin fixe par rapport à un axe principal du support au niveau d'un cinquième point de contact ;
- le galet avant de façonnage et le galet arrière de façonnage présentent une section en forme de T et le pion présente une forme générale cylindrique, de sorte à former une bouche au niveau d'un col du produit.

Il est proposé, en second lieu, une machine comprenant :
- une mâchoire configurée pour être solidaire du produit et pour être mue le long d'une trajectoire présentant une forme en arc de cercle définie par la machine ;
- un dispositif de formage tel que précédemment décrit, le dispositif de formage étant mobile en rotation autour d'un axe principal fixe par rapport à un bras principal de la machine ;
le palpeur du dispositif de formage étant en contact avec la mâchoire de telle sorte que le palpeur suive la trajectoire définie par la machine, le moyen de transfert du dispositif de formage définissant la distance séparant l'outil de façonnage et le produit, le produit présentant une section circulaire et ayant un axe de révolution sensiblement vertical.

En supplément, la machine comprend :
- un dispositif d'ébauche muni :
   - d'un galet avant de façonnage présentant une section comprenant deux segments obliques, définissant un angle aigu, et un congé au niveau de cet angle aigu, et
   - d'un pion comportant un pan oblique,
      apte à former un évasement au niveau du col du produit, et
- un dispositif de préformage muni :
   - d'un galet avant de façonnage présentant une section comprenant deux segments obliques, définissant un angle aigu, solidaires d'un segment vertical, et
   - d'un pion présentant une forme cylindrique,
      apte à former, à la suite du formage de l'évasement et en amont du formage de la bouche, une épaule et un cou au niveau du col du produit.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue schématique en perspective d'un dispositif d'ébauche dans une position avancée initiale ;
- la figure 2 est une vue schématique en perspective du dispositif d'ébauche dans une position reculée intermédiaire ;
- la figure 3 est une vue schématique en perspective d'un dispositif de préformage dans la position avancée initiale ;
- la figure 4 est une vue schématique en perspective du dispositif de préformage dans la position reculée intermédiaire ;
- la figure 5 est une vue schématique en perspective d'un dispositif de formage dans la position avancée initiale ;
- la figure 6 est une vue schématique en perspective du dispositif de formage dans la position reculée intermédiaire ;
- la figure 7 est une vue schématique en perspective d'une machine comprenant le dispositif d'ébauche illustré sur les figures 1 et 2, le dispositif d'ébauche entrant en contact avec un produit ;
- la figure 8 est une vue schématique en perspective de la machine comprenant le dispositif d'ébauche, le dispositif d'ébauche étant entrain de former un évasement sur le produit ;
- la figure 9 est une vue schématique en perspective de la machine comprenant le dispositif d'ébauche, le produit s'écartant du dispositif d'ébauche ;
- la figure 10 est une vue schématique du dispositif d'ébauche formant un évasement sur le produit ;
- la figure 11 est une vue schématique du dispositif de préformage formant une épaule et un cou sur le produit ;
- la figure 12 est une vue schématique du dispositif de formage formant une bouche régulière sur le produit.

### Caractéristiques communes à un dispositif 1a d'ébauche, un dispositif 1b de préformage et un dispositif 1c de formage

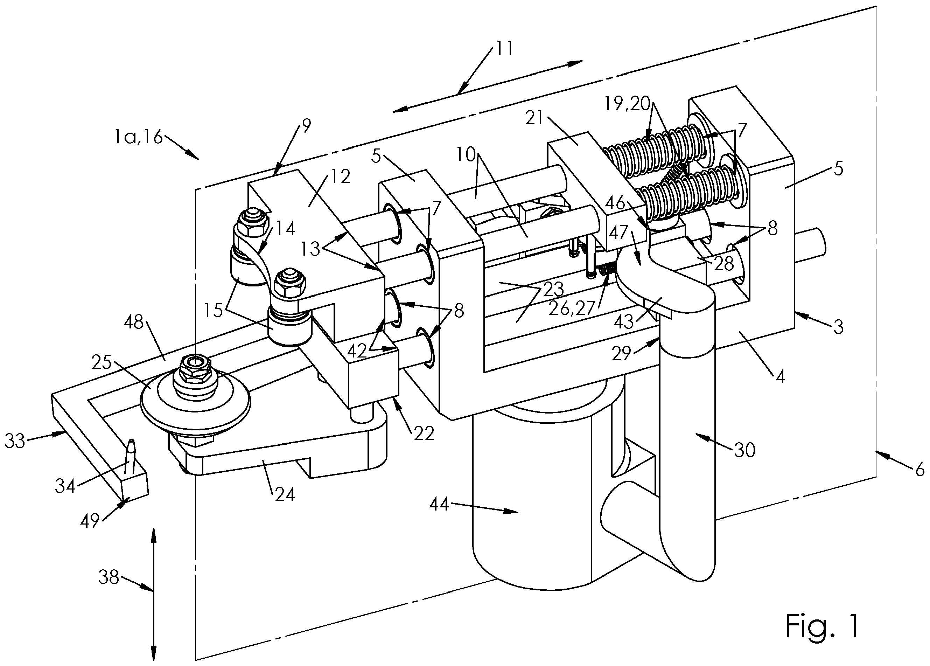

Sur les figures 1 à 6 sont représenté le dispositif **1a** d'ébauche, le dispositif **1b** de préformage et le dispositif **1c** de formage pour la réalisation d'un col **80** sur un récipient **2.**

Selon le mode de réalisation représenté, le produit **2** est un tube en verre coupé à une longueur désirée.

Selon les modes de réalisation représentés, les dispositifs **1a, 1b, 1c** comprennent un support **3** muni d'une âme **4** et de deux ailes **5** disposées de part et d'autre de l'âme **4.** L'âme **4** et les ailes **5** définissent une section en U.

Avantageusement, le support **3** est symétrique par rapport à un plan **6** milieu traversant les ailes **5** perpendiculairement en leur milieu.

Chaque aile **5** comprend deux perçages **7** d'indexage alignés deux à deux et disposés de part et d'autre du plan **6** milieu. Chaque aile **5** comprend également deux perçages **8** de façonnage alignés deux à deux et disposés de part et d'autre du plan **6** milieu.

Les dispositifs **1a, 1b, 1c** comportent un palpeur **9** muni de deux tiges **10** d'indexage de forme complémentaire à la forme des perçages **7** d'indexage des ailes **5** du support **3.**

Les perçages **7** d'indexage sont disposés de telle sorte que les tiges **10** d'indexage sont parallèles. Chaque tige **10** d'indexage est apte à coulisser à travers deux des quatre perçages **7** d'indexage du support **3.**

Les tiges **10** d'indexage définissent une direction dite direction **11** de travail, parallèle au plan **6** milieu. Le palpeur **9** est ainsi mobile en translation par rapport au support **3** suivant la direction **11** de travail.

Le palpeur **9** comprend également un socle **12** de fixation solidaire d'un bout **13** d'indexage des tiges **10** d'indexage. Avantageusement, le socle **12** de fixation comprend une avancée **14** définissant, d'un côté opposé aux tiges **10** d'indexage, un profil courbe convexe vers les tiges **10** d'indexage.

Le socle **12** de fixation comprend également deux galets **15** d'indexage fixés de part et d'autre du profil courbe défini par l'avancée **14** et en saillie de ce profil courbe, à l'opposé du support **3** suivant la direction **11** de travail. Avantageusement, les galets **15** d'indexage sont disposés symétriquement par rapport au plan **6** milieu.

Les dispositifs **1a, 1b, 1c** sont dits en position **16** avancée initiale ou en position **17** avancée finale lorsque les galets **15** d'indexage du palpeur **9** sont éloignés du support **3** suivant la direction **11** de travail.

Les dispositifs **1a, 1b, 1c** sont dits en position **18** reculée intermédiaire lorsque les galets **15** d'indexage du palpeur **9** sont proches du support **3** suivant la direction **11** de travail.

Selon un mode de réalisation non représenté, la distance séparant les galets **15** d'indexage et le support **3,** suivant la direction **11** de travail, est identique lorsque les dispositifs **1a, 1b, 1c** sont en position **16** avancée initiale ou en position **17** avancée finale.

Le palpeur **9** comprend un élément **19** de rappel d'indexage, configuré pour écarter les galets **15** d'indexage et le support **3** suivant la direction **11** de travail.

Selon les modes de réalisation représentés, l'élément **19** de rappel d'indexage est muni de deux ressorts **20** d'indexage prenant appui sur une des ailes **5** du support **3** et sur un mors **21** d'indexage du palpeur **9,** le mors **21** d'indexage étant fixe par rapport aux tiges **10** d'indexage.

Comme illustré sur les figures 1 à 6, les dispositifs **1a, 1b, 1c** comprennent un outil **22** de façonnage muni de deux tiges **23** de façonnage de forme complémentaire à la forme des perçages **8** de façonnage des ailes **5** du support **3.**

Les perçages **8** de façonnage sont disposés de sorte que les tiges **23** de façonnage sont parallèles. Chaque tige **23** de façonnage est apte à coulisser à travers deux des quatre perçages **8** de façonnage du support **3.**

Les tiges **23** de façonnage sont disposées dans la direction **11** de travail. Les tiges **23** de façonnage sont ainsi mobiles en translation par rapport au support **3** suivant la direction **11** de travail.

L'outil **22** de façonnage comprend également une base **24** de fixation, solidaire d'une tige **23** de façonnage.

La base **24** de fixation comprend un galet **25** avant de façonnage, fixé en saillie de la base **24** de fixation, à l'opposé du support **3** suivant la direction **11** de travail. Le galet **25** avant de façonnage de l'outil **22** de façonnage et les galets **15** d'indexage du palpeur **9** sont disposés d'un même côté du support **3.**

Selon les modes de réalisation représentés, les galets **15** d'indexage sont disposés, suivant la direction **11** de travail, entre le support **3** et le galet **25** avant de façonnage. Avantageusement, le galet **25** avant de façonnage est traversé en son milieu par le plan **6** milieu.

L'outil **22** de façonnage comprend un élément **26** de rappel de façonnage, configuré pour éloigner le galet **25** avant de façonnage des galets **15** d'indexage suivant la direction **11** de travail.

Selon les modes de réalisation représentés, l'élément **26** de rappel de façonnage est muni de deux ressorts **27** de façonnage solidaires du mors **21** d'indexage et d'un mors **28** de façonnage de l'outil **22** de façonnage, le mors **28** de façonnage étant fixe par rapport aux tiges **23** de façonnage.

Les dispositifs **1a, 1b, 1c** comprennent également un moyen **29** de transfert, mobile par rapport au palpeur **9** et à l'outil **22** de façonnage. Le moyen **29** de transfert est, de préférence, mobile en rotation autour d'un axe **30** de transfert.

Le moyen **29** de transfert est en contact, en un premier point **31** de contact, avec le palpeur **9** et, en un deuxième point **32** de contact, avec l'outil **22** de façonnage.

Le moyen **29** de transfert est apte à faire varier la distance séparant le galet **25** avant de façonnage de l'outil **22** de façonnage et les galets **15** d'indexage du palpeur **9,** suivant la direction **11** de travail, en fonction du déplacement du palpeur **9** par rapport au support **3.**

La forme du moyen **29** de transfert est ainsi configurée pour faire varier la distance séparant le premier point **31** de contact et le deuxième point **32** de contact.

Selon un mode de réalisation non représenté, le mors **21** d'indexage du palpeur **9** ou le mors **28** de façonnage de l'outil **22** de façonnage comprennent une barre, apte à définir une distance maximale séparant les galets **15** d'indexage du palpeur **9** et le galet **25** avant de façonnage.

Lorsque les dispositifs **1a, 1b, 1c** sont en position **16** avancée initiale ou en position **17** avancée finale, le moyen **29** de transfert est configuré pour forcer un rapprochement, suivant la direction **11** de travail, du galet **25** avant de façonnage de l'outil **22** de façonnage et des galets **15** d'indexage du palpeur **9.**

Lorsque les dispositifs **1a, 1b, 1c** sont en position **18** reculée intermédiaire, le moyen **29** de transfert est configuré pour permettre un éloignement, suivant la direction **11** de travail, du galet **25** avant de façonnage et des galets **15** d'indexage.

Selon un mode de réalisation non représenté, la distance séparant le galet **25** avant de façonnage et les galets **15** d'indexage, suivant la direction **11** de travail, est identique lorsque les dispositifs **1a,1b,1c** sont en position **16** avancée initiale ou en position **17** avancée finale.

Selon les modes de réalisation illustrés, le premier point **31** de contact entre le moyen **29** de transfert et le palpeur **9** est situé sur le mors **21** d'indexage. Le deuxième point **32** de contact entre le moyen **29** de transfert et l'outil **22** de façonnage est situé sur le mors **28** de façonnage.

Selon les modes de réalisation représentés, les dispositifs **1a, 1b, 1c** comprennent un outil **33** d'appui. L'outil **33** d'appui est muni d'un pion **34** disposé de sorte que le galet **25** avant de façonnage de l'outil **22** de façonnage soit situé, suivant la direction **11** de travail, entre le pion **34** et les galets **15** d'indexage du palpeur **9.**

Avantageusement, le pion **34** et le galet **25** avant de façonnage de l'outil **22** de façonnage sont alignés suivant une direction parallèle à la direction **11** de travail.

L'outil **33** d'appui comprend également un élément **35** de rappel d'appui, une came **36** et un galet **37** suiveur. Le galet **37** suiveur étant apte à suivre la forme de la came **36.**

L'élément **35** de rappel d'appui maintient un contact entre la came **36** et le galet **37** suiveur de telle sorte que la forme de la came **36** soit définie pour faire varier la distance séparant le pion **34** et le galet **25** avant de façonnage, suivant une direction dite direction **38** d'appui.

La direction **38** d'appui est, de préférence, parallèle au plan **6** milieu et perpendiculaire à la direction **11** de travail.

Ainsi, lorsque les dispositifs **1a, 1b, 1c** sont en position **16** avancée initiale ou en position **17** avancée finale, la came **36** et le galet **37** suiveur sont en contact en un premier point **39** d'appui, défini de sorte que le pion **34** est éloigné du galet **25** avant de façonnage suivant la direction **38** d'appui.

Lorsque les dispositifs **1a, 1b, 1c** sont en position **18** reculée intermédiaire, la came **36** et le galet **37** suiveur sont en contact en un deuxième point **40** d'appui, défini de sorte que le pion **34** est proche du galet **25** avant de façonnage suivant la direction **38** d'appui.

Selon les modes de réalisation représentés, la came **36** est mobile en rotation, autour d'un axe **41** d'appui sensiblement perpendiculaire au plan **6** milieu, et solidaire du socle **12** de fixation du palpeur **9.**

Selon un mode de réalisation non représenté, la distance séparant le pion **34** et le galet **25** avant de façonnage, suivant la direction **38** d'appui, est identique lorsque les dispositifs **1a, 1b, 1c** sont en position **16** avancée initiale ou en position **17** avancée finale.

### Caractéristiques communes au dispositif 1a d'ébauche et au dispositif 1b de préformage

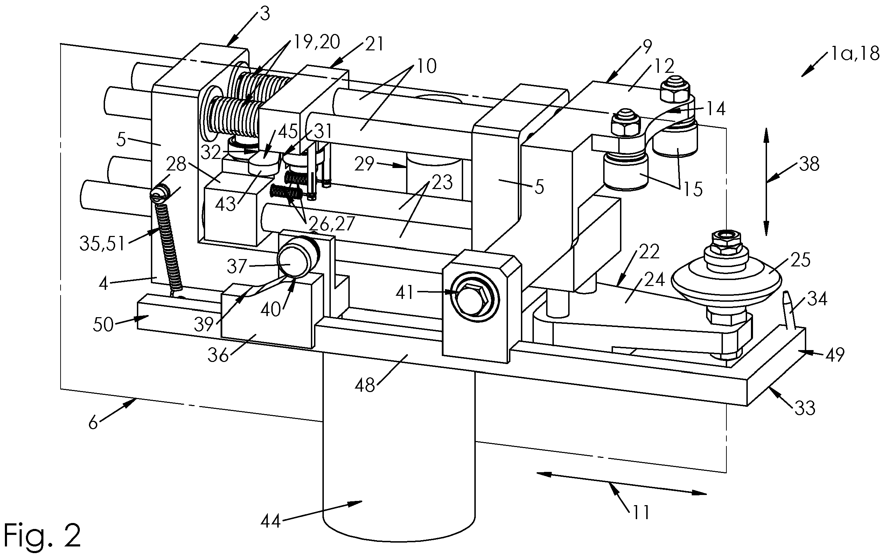

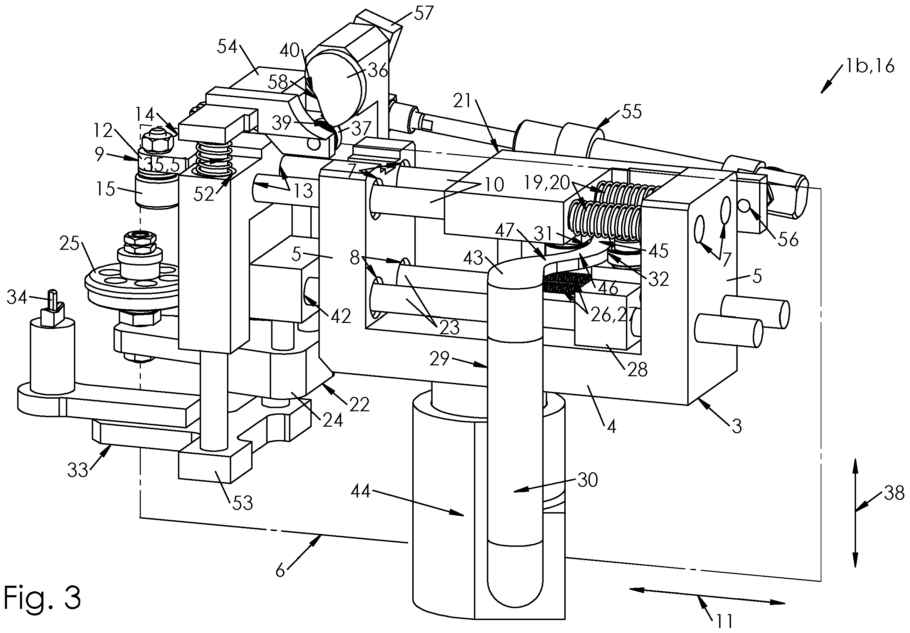

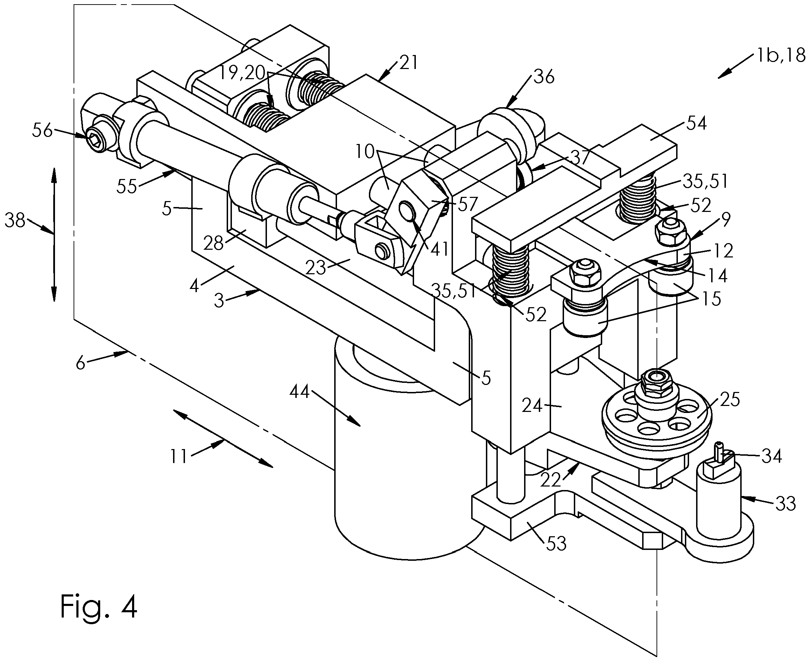

Les deux tiges **23** de façonnage de l'outil **22** de façonnage du dispositif **1a** d'ébauche, représenté sur les figures 1 et 2, et du dispositif **1b** de préformage, illustré sur les figures 3 et 4, sont chacune solidaires, en un bout **42** de façonnage, de la base **24** de fixation.

Avantageusement, le mors **21** d'indexage du palpeur **9** et le mors **28** de façonnage de l'outil **22** de façonnage sont disposés entre les ailes **5** du support **3.**

Le moyen **29** de transfert, du dispositif **1a** d'ébauche et du dispositif **1b** de préformage, comprend une langue **43,** mobile en rotation autour de l'axe **30** de transfert. L'axe **30** de transfert est fixe par rapport à un axe **44** principal du support **3.**

La langue **43** comprend une première extrémité **45,** une partie **46** centrale et une deuxième extrémité **47.** La langue **43** présente une forme en S, de sorte que la partie **46** centrale de la langue **43** est disposée au niveau d'un virage formé par la forme en S de la langue **43.**

La première extrémité **45** et la deuxième extrémité **47** ont une largeur plus importante que la largeur de la partie **46** centrale. La largeur de la langue **43** est la distance séparant le premier point **31** de contact et le deuxième point **32** de contact, suivant une direction définie par le premier point **31** de contact et le deuxième point **32** de contact, à toutes les positions prises par le premier point **31** de contact et le deuxième point **32** de contact, lors du déplacement du palpeur **9** par rapport au support **3.**

Selon un mode de réalisation non représenté, la largeur de la première extrémité **45** et la largeur de la deuxième extrémité **47** sont identiques.

Ainsi, lorsque les dispositifs **1a**, **1b** sont en position **16** avancée initiale, le premier point **31** de contact et le deuxième point **32** de contact sont situés sur la première extrémité **45** de la langue **43.**

Lorsque les dispositifs **1a, 1b** sont en position **18** reculée intermédiaire, le premier point **31** de contact et le deuxième point **32** de contact sont situés sur la partie **46** centrale de la langue **43.**

Lorsque les dispositifs **1a, 1b** sont en position **17** avancée finale, le premier point **31** de contact et le deuxième point **32** de contact sont situés sur la deuxième extrémité **47** de la langue **43.**

### Caractéristiques particulières du dispositif 1a d'ébauche

L'outil **33** d'appui du dispositif **1a** d'ébauche, illustré sur les figures 1 et 2, comprend une tige **48** d'appui, mobile en rotation autour de l'axe **41** d'appui fixe par rapport au palpeur **9.**

Le pion **34** de l'outil **33** d'appui est fixé à un premier bout **49** d'appui de la tige **48** d'appui. La came **36** est solidaire d'un deuxième bout **50** d'appui de la tige **48** d'appui et le galet **37** suiveur est solidaire de l'âme **4** du support **3.**

Le premier bout **49** d'appui et le deuxième bout **50** d'appui sont disposés de part et d'autre de l'axe **41** d'appui.

L'élément **35** de rappel d'appui est muni d'un ressort **51** d'appui, fixé au deuxième bout **50** d'appui et au support **3** de sorte que le ressort **51** d'appui soit apte à éloigner, suivant la direction **38** d'appui, le pion **34** du le galet **25** avant de façonnage de l'outil **22** de façonnage.

### Caractéristiques communes au dispositif 1b de préformage et au dispositif 1c de formage

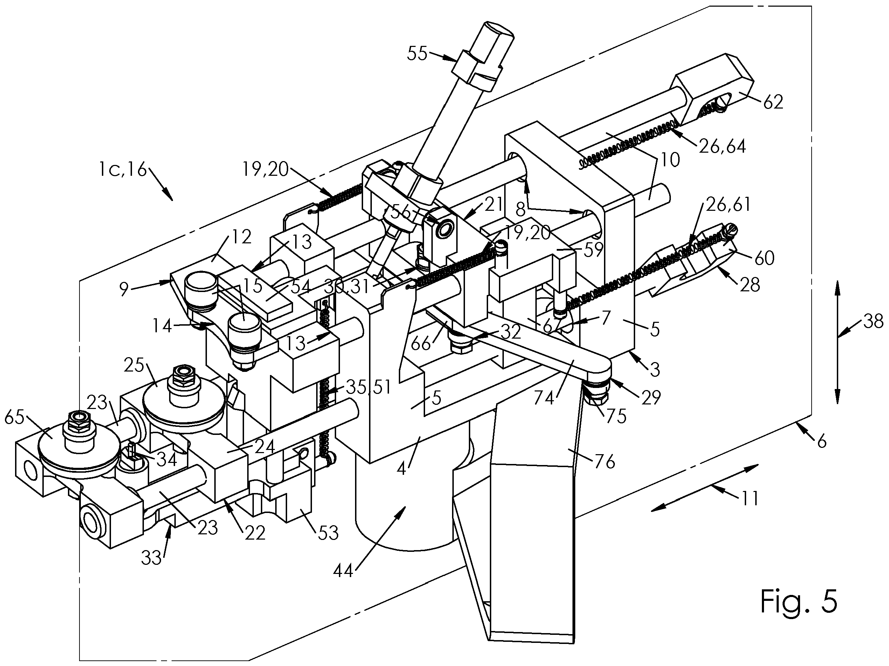

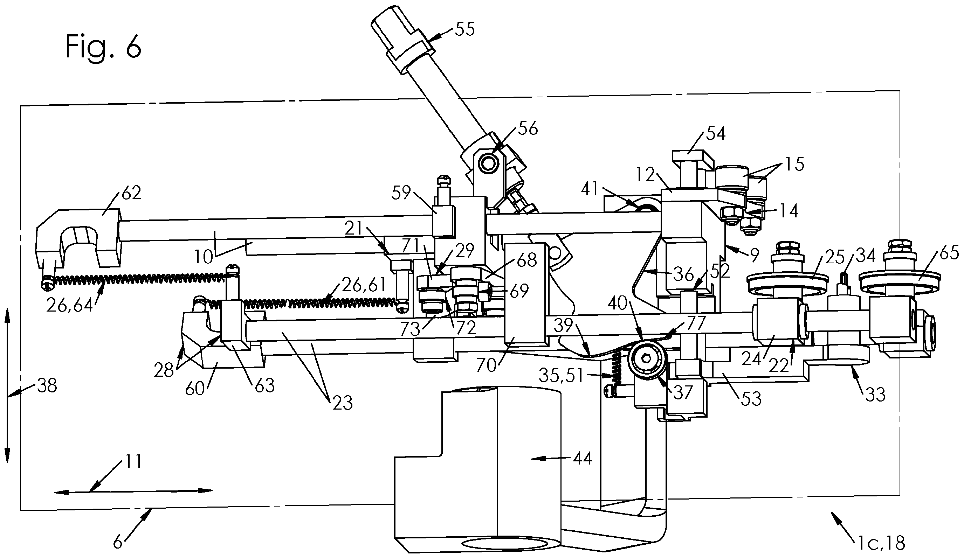

L'outil **33** d'appui du dispositif **1b** de préformage, représenté sur les figures 3 et 4, et du dispositif **1c** de formage, illustré sur les figures 5 et 6, comprend deux tiges **48** d'appui, de forme complémentaire à la forme de deux perçages **52** d'appui réalisés dans le socle **12** de fixation du palpeur **9.** Les tiges **48** d'appui sont chacune aptes à coulisser dans un perçage **52** d'appui, suivant la direction **38** d'appui.

Pour permettre une meilleure compréhension du dispositif **1c** de formage, le support **3** n'est pas représenté sur la figure 6.

L'outil **33** d'appui comprend une embase **53** inférieure, solidaire des tiges **48** d'appui. Le pion **34** est fixé sur l'embase **53** inférieure.

L'outil **33** d'appui comprend également une embase **54** supérieure, solidaire des tiges **48** d'appui d'un côté des tiges **48** d'appui opposé à l'embase **53** inférieure, par rapport au socle **12** de fixation du palpeur **9.**

L'élément **35** de rappel d'appui est disposé de sorte qu'il soit apte à rapprocher, suivant la direction **38** d'appui, le pion **34** et le galet **25** avant de façonnage de l'outil **22** de façonnage.

La came **36,** du dispositif **1b** de préformage et du dispositif **1c** de formage, est entraînée en rotation, par le biais d'un vérin **55** lui-même mobile en rotation autour d'un axe **56** d'indexage sensiblement parallèle à l'axe **41** d'appui et solidaire du mors **21** d'indexage du palpeur **9.**

Le vérin **55** est, de préférence, pneumatique et piloté par le biais d'un contrôleur, non représenté sur les figures. Le contrôleur permet de faire varier la longueur du vérin **55** afin de faire pivoter la came **36** autour de l'axe **41** d'appui, et ainsi de mettre en mouvement le pion **34** de l'outil **33** d'appui suivant la direction **38** d'appui.

Selon des modes de réalisation différents, le vérin **55** est hydraulique ou électrique. Le vérin **55** peut également être remplacé par un système apte à modifier la distance séparant l'axe **56** d'indexage solidaire du palpeur **9** et le point reliant le vérin **55** et la came **36.**

### Caractéristiques particulières du dispositif 1b de préformage

L'élément **35** de rappel d'appui du dispositif **1b** de préformage, représenté sur les figures 3 et 4, comprend deux ressorts **51** d'appui, disposés entre le socle **12** de fixation du palpeur **9** et l'embase **54** supérieure de l'outil **33** d'appui. Chaque ressort **51** d'appui est disposé autour d'une des tiges **48** d'appui de l'outil **33** d'appui.

L'axe **56** d'indexage est disposé à l'opposé de la came **36** par rapport au moyen **29** de transfert. Le vérin **55** est solidaire de l'axe **41** d'appui par le biais d'un bras **57** d'appui mobile en rotation par rapport au vérin **55.**

Le galet **37** suiveur est solidaire de l'embase **54** supérieure de l'outil **33** d'appui.

La came **36** a une forme générale de demi-disque, dont le diamètre comprend une excavation **58** concave vers l'extérieur du demi-disque. L'axe **41** d'appui n'est pas centré sur la came **36** de sorte que lorsque la came **36** est mise en mouvement de rotation autour de l'axe **41** d'appui, par le biais du bras **57** d'appui via le vérin **55,** la distance séparant le galet **37** suiveur et l'axe **41** d'appui évolue, afin de faire varier la distance, suivant la direction **38** d'appui, séparant le pion **34** de l'outil **33** d'appui et le galet **25** avant de façonnage de l'outil **22** de façonnage.

### Caractéristiques particulières du dispositif 1c de formage

Le mors **21** d'indexage du palpeur **9** du dispositif **1c** de formage, illustré sur les figures 5 et 6, comprend un premier élément **59** d'indexage, solidaire du vérin **55** et de l'élément **19** de rappel d'indexage. Le premier élément **59** d'indexage est disposé entre les ailes **5** du support **3.**

Le mors **28** de façonnage de l'outil **22** de façonnage comprend un premier élément **60** de façonnage, solidaire du premier élément **59** d'indexage, par le biais d'un premier ressort **61** de façonnage de l'élément **26** de rappel de façonnage. Le premier élément **60** de façonnage est solidaire du galet **25** avant de façonnage de l'outil **22** de façonnage, par le biais d'une première des deux tiges **23** de façonnage. Le premier élément **59** d'indexage est disposé, suivant la direction **11** de travail, entre le galet **25** avant de façonnage et le premier élément **60** de façonnage.

Selon un mode de réalisation non représenté, le premier élément **59** d'indexage est muni d'une première partie solidaire du vérin 55 et de l'élément **19** de rappel d'indexage, et d'une deuxième partie solidaire du premier élément **60** de façonnage par le biais du premier ressort 61 de façonnage.

Le mors **21** d'indexage comprend un deuxième élément **62** d'indexage, solidaire d'un deuxième élément **63** de façonnage de l'outil **22** de façonnage, par le biais d'un deuxième ressort **64** de façonnage de l'élément **26** de rappel de façonnage. Le deuxième élément **63** de façonnage est solidaire d'un galet **65** arrière de façonnage de l'outil **22** de façonnage, par le biais de la seconde tige **23** de façonnage. Le deuxième élément **63** de façonnage est disposé, suivant la direction **11** de travail, entre le deuxième élément **62** d'indexage et le galet **65** arrière de façonnage.

Le pion **34** de l'outil **33** d'appui est disposé entre le galet **25** avant de façonnage et le galet **65** arrière de façonnage.

Avantageusement, le galet **65** arrière de façonnage est traversé en son milieu par le plan **6** milieu.

Le galet **25** avant de façonnage et le galet **65** arrière de façonnage du dispositif **1c** de formage sont disposés symétriquement par rapport au pion **34.**

Le deuxième ressort **64** de façonnage de l'élément **26** de rappel de façonnage est configuré pour rapprocher le galet **65** arrière de façonnage et le pion **34.**

L'axe **30** de transfert du moyen **29** de transfert du dispositif **1c** de formage est fixe, par rapport au premier élément **59** d'indexage du mors **21** d'indexage. Le premier point **31** de contact entre le moyen **29** de transfert et le palpeur **9** appartient à l'axe **30** de transfert.

Le moyen **29** de transfert comprend une première branche **66** apte à venir en contact, au niveau du deuxième point **32** de contact, avec un troisième élément **67** de façonnage du mors **28** de façonnage. Le troisième élément **67** de façonnage est solidaire du galet **25** avant de façonnage et de la première des deux tiges **23** de façonnage. Le troisième élément **67** de façonnage est disposé entre le galet **25** avant de façonnage et le premier élément **60** de façonnage du mors **28** de façonnage.

Le moyen **29** de transfert comprend une deuxième branche **68** apte à venir en contact, au niveau d'un troisième point **69** de contact, avec un quatrième élément **70** de façonnage du mors **28** de façonnage. Le quatrième élément **70** de façonnage est solidaire du galet **65** arrière de façonnage et de la seconde tige **23** de façonnage. Le quatrième élément **70** de façonnage est disposé entre le galet **65** arrière de façonnage et le deuxième élément **63** de façonnage.

Le moyen **29** de transfert comprend une troisième branche **71** apte à venir en contact, au niveau d'un quatrième point **72** de contact, avec un premier chemin **73** du support **3.**

La première branche **66** du moyen **29** de transfert comprend une partie **74** oblique, définissant un angle confondu avec le deuxième point **32** de contact. La partie **74** oblique est apte à venir en contact, au niveau d'un cinquième point **75** de contact, avec un deuxième chemin **76** fixe par rapport à l'axe **44** principal du support **3.**

Ainsi, lorsque le dispositif **1c** de formage est en position **16** avancée initiale ou en position **17** avancée finale, le moyen **29** de transfert, suivant simultanément le premier chemin **73** et le deuxième chemin **76,** est configuré pour forcer un écartement, suivant la direction **11** de travail, du galet **25** avant de façonnage et du galet **65** arrière de façonnage de l'outil **22** de façonnage avec le pion **34** de l'outil **33** d'appui.

Lorsque le dispositif **1c** de formage est en position **18** reculée intermédiaire, le moyen **29** de transfert, suivant simultanément le premier chemin **73** et le deuxième chemin **76,** est configuré pour permettre un rapprochement, suivant la direction **11** de travail, du galet **25** avant de façonnage et du galet **65** arrière de façonnage de l'outil **22** de façonnage avec le pion **34** de l'outil **33** d'appui.

Le vérin **55** du dispositif **1c** de formage est disposé entre les tiges **10** d'indexage du palpeur **9.** Le vérin **55** est directement solidaire de la came **36.**

L'élément **35** de rappel d'appui comprend un ressort **51** d'appui disposé entre le socle **12** de fixation du palpeur **9** et l'embase **53** inférieure de l'outil **33** d'appui.

Le galet **37** suiveur est solidaire de l'embase **53** inférieure de l'outil **33** d'appui.

La came **36** comprend une face **77** suiveuse de sorte que lorsque la came **36** est mise en mouvement de rotation autour de l'axe **41** d'appui, par le biais du vérin **55,** la distance séparant le galet **37** suiveur et l'axe **41** d'appui évolue, afin de faire varier la distance, suivant la direction **38** d'appui, séparant le pion **34** de l'outil **33** d'appui et le galet **25** avant de façonnage de l'outil **22** de façonnage.

Selon un mode de réalisation non représenté, le dispositif **1c** de formage ne comprend pas d'outil **33** d'appui.

### Description d'une machine 78 comprenant le dispositif 1a d'ébauche

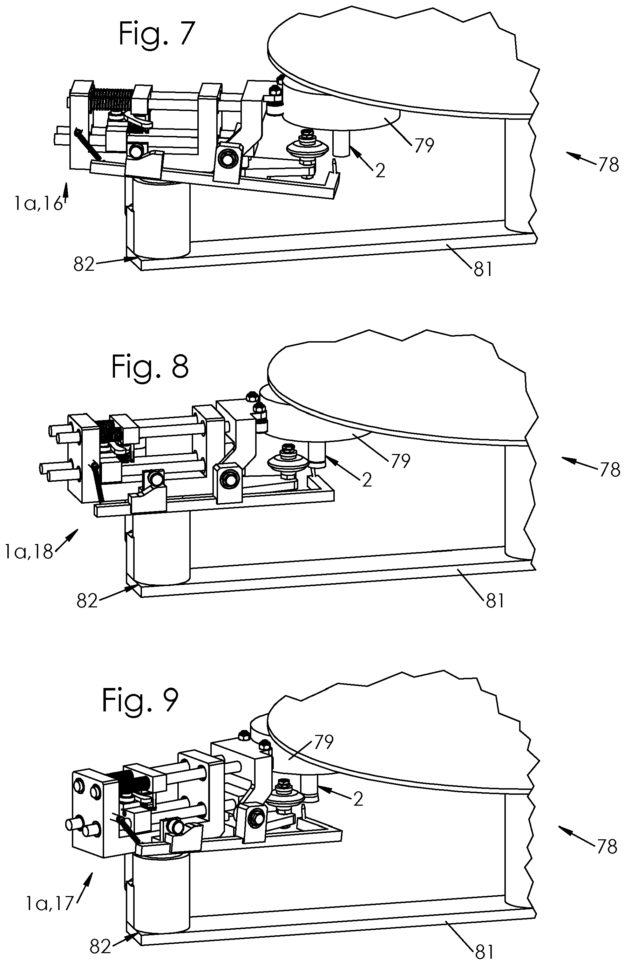

Sur les figures 7 à 9 est représentée la machine **78** comprenant le dispositif **1a** d'ébauche pour la réalisation d'une opération sur le produit **2.**

La machine **78** comprend une mâchoire **79** parcourant une trajectoire prédéfinie.

Selon le mode de réalisation représenté, la trajectoire est en forme d'arc de cercle.

La mâchoire **79** est apte à agripper le produit **2** qui, selon le mode de réalisation représenté, est un tube de section circulaire en verre. Avantageusement, la mâchoire **79** est apte à tourner autour d'un axe de révolution du tube. L'axe de révolution du tube est, de préférence, disposé sensiblement verticalement.

Selon le mode de réalisation représenté, le galet **25** avant de façonnage est apte à réaliser une opération de formage d'un col **80** sur le produit **2.**

La machine **78** comprend également un bras **81** principal, fixe par rapport au centre de l'arc de cercle défini par la trajectoire. L'axe **44** principal du support **3** est disposé à une extrémité **82** externe du bras **81** principal. Le support **3** est mobile en rotation, par rapport au bras **81** principal, autour de l'axe **44** principal.

Lorsque le dispositif **1a** d'ébauche est en position **16** avancée initiale, comme illustré sur la figure 7, les galets **15** d'indexage du palpeur **9** prennent appui sur la mâchoire **79** et le galet **25** avant de façonnage de l'outil **22** de façonnage entre en contact avec le produit **2.**

Lorsque le dispositif **1a** d'ébauche est positionné entre la position **16** avancée initiale et la position **17** avancée finale, comme illustré sur la figure 8, le palpeur **9** et l'élément **19** de rappel d'indexage permettent au dispositif **1a** d'ébauche de suivre la trajectoire du produit **2.** Le produit **2** est en cours de formage, par le biais du galet **25** avant de façonnage. Entre la position **16** avancée initiale et la position **17** avancée finale le dispositif **1a** d'ébauche passe par la position **18** reculée intermédiaire.

Lorsque le dispositif **1a** d'ébauche est en position **17** avancée finale, comme illustré sur la figure 9, le formage du produit **2** est terminé et le dispositif **1a** d'ébauche revient en position **16** avancée initiale.

Selon un mode de réalisation non représenté, la machine **78** comprend trois dispositifs **1a, 1b, 1c** positionnés de sorte qu'un produit **2** parcourant la trajectoire définie par la machine **78** passe successivement par chacun des trois dispositifs **1a**, **1b, 1c**.

Avantageusement, les trois dispositifs **1a, 1b, 1c** sont le dispositif **1a** d'ébauche, le dispositif **1b** de préformage et le dispositif **1c** de formage. Ainsi, le produit **2** passe d'abord par le dispositif **1a** d'ébauche, puis par le dispositif **1b** de préformage et enfin par le dispositif **1c** de formage.

### Description des galets 25,26 du dispositif 1a d'ébauche, du dispositif 1b de préformage et du dispositif 1c de formage

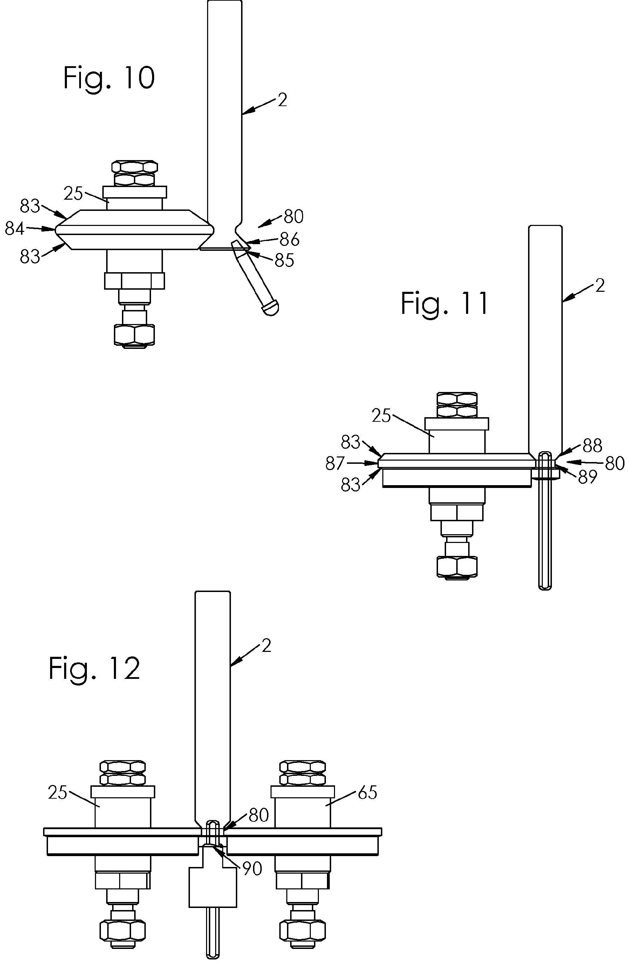

Comme représenté sur la figure 10, le galet **25** avant de façonnage du dispositif **1a** d'ébauche a une section formé de deux segments **83** obliques, définissant un angle aigu et un congé **84** au niveau de cet angle aigu, le pion **34** comprend un pan **85** oblique, de sorte à former un évasement **86** au niveau du col **80** du produit **2.**

Comme illustré sur la figure 11, le galet **25** avant de façonnage du dispositif **1b** de préformage a une section formé de deux segments **83** obliques, solidaires d'un segment **87** vertical et le pion **34** a une forme cylindrique de sorte à former une épaule **88** et un cou **89** au niveau du col **80** du produit **2.**

Comme illustré sur la figure 12, le galet **25** avant de façonnage et le galet **65** arrière de façonnage du dispositif **1c** de formage ont une section en forme de T et le pion **34** a une forme cylindrique de sorte à former une bouche **90** régulière au niveau du col **80** du produit **2.**

Selon un mode de réalisation non représenté, un chalumeau est solidaire du palpeur **9,** de sorte à maintenir le produit **2** à une température adéquate pour le formage du col **80.**

Les dispositifs **1a, 1b, 1c** sont ainsi simples de fabrication et de réglage, la forme du moyen **29** de transfert permettant, à elle seule, en fonction du déplacement du palpeur **9,** de définir la distance séparant le galet **25** avant de façonnage et le galet **65** arrière de façonnage du produit **2.**

Les dispositifs **1a, 1b, 1c** sont peu encombrants et le palpeur **9** ainsi que l'outil **22** de façonnage fonctionnent sans la présence d'une source d'énergie additionnelle.

Les dispositifs **1a,1b,1c,** ainsi réalisés, permettent de suivre une trajectoire quelconque prédéfinie par une machine **78** comprenant les dispositifs **1a,1b,1c** sans réglage des dispositifs **1a,1b,1c** et la réalisation d'une opération sur le produit **2** suivant cette trajectoire.

## Revendications

1. Dispositif **(1c)** de formage pour la réalisation d'une opération sur un produit **(2)** de forme tubulaire en verre, ce dispositif **(1c)** comprenant :
- un support **(3)** ;
- un outil **(22)** de façonnage, mobile en translation par rapport au support **(3)** suivant une direction **(11)** de travail ;
- un palpeur **(9),** mobile en translation par rapport au support **(3)** suivant la direction **(11)** de travail, ce palpeur **(9)** étant configuré pour indexer l'outil **(22)** de façonnage par rapport au produit **(2)** ;
- un outil **(33)** d'appui muni d'un pion **(34),** d'une came **(36)** et d'un galet **(37)** suiveur, la came **(36)** étant mobile en rotation autour d'un axe **(41)** d'appui fixe par rapport au palpeur **(9),** le galet **(37)** suiveur suivant la forme de la came **(36),** de telle sorte à faire varier la distance séparant le pion **(34)** et l'outil **(22)** de façonnage suivant une direction **(38)** d'appui perpendiculaire à la direction **(11)** de travail, cet outil **(33)** d'appui étant configuré pour réaliser, avec l'outil **(22)** de façonnage, l'opération sur le produit **(2)** ;
ce dispositif **(1c)** de formage étant **caractérisé en ce qu'**il comprend en outre un moyen **(29)** de transfert d'un mouvement de translation du palpeur **(9)** en un mouvement de translation de l'outil **(22)** de façonnage, ce moyen **(29)** de transfert étant mobile en rotation, par rapport au palpeur **(9),** autour d'un axe **(30)** de transfert fixe par rapport au palpeur **(9)** et étant également mobile par rapport à l'outil **(22)** de façonnage, ce moyen **(29)** de transfert étant en contact, en un premier point **(31)** de contact confondu avec l'axe **(30)** de transfert, avec le palpeur **(9)** et, en un deuxième point **(32)** de contact, avec l'outil **(22)** de façonnage, la distance séparant le premier point **(31)** de contact et le deuxième point **(32)** de contact varie en fonction du déplacement du palpeur **(9)** par rapport au support **(3),** cette distance étant définie par la forme du moyen **(29)** de transfert.

2. Dispositif **(1c)** de formage selon la revendication précédente, **caractérisé en ce que** l'outil **(22)** de façonnage comprend un galet **(25)** avant de façonnage et le palpeur **(9)** comprend un galet **(15)** d'indexage disposé, suivant la direction **(11)** de travail, entre le support **(3)** et le galet **(25)** avant de façonnage.

3. Dispositif **(1c)** de formage selon la revendication précédente, **caractérisé en ce qu'**il définit une position **(16,17)** avancée et une position **(18)** reculée où les distances, suivant la direction **(11)** de travail et suivant la direction **(38)** d'appui, séparant le pion **(34)** de l'outil **(33)** d'appui et le galet **(25)** avant de façonnage de l'outil **(22)** de façonnage sont inférieures aux distances, respectivement suivant la direction **(11)** de travail et suivant la direction **(38)** d'appui, séparant le pion **(34)** et le galet **(25)** avant de façonnage lorsque le dispositif **(1c)** de formage est en position **(16,17)** avancée.

4. Dispositif **(1c)** de formage selon l'une quelconque des revendications précédentes, **caractérisé en ce que** l'outil **(33)** d'appui est mobile en translation suivant la direction **(38)** d'appui par rapport au palpeur **(9).**

5. Dispositif **(1c)** de formage selon l'une quelconque des revendications précédentes, **caractérisé en ce qu'**il comprend un vérin **(55)** solidaire du palpeur **(9)** et de la came **(36)** de l'outil **(33)** d'appui, le vérin **(55)** étant configuré pour mettre en mouvement la came **(36)** en fonction du déplacement du palpeur **(9)** par rapport au support **(3).**

6. Dispositif **(1c)** de formage selon l'une quelconque des revendications 2 à 5, **caractérisé en ce que** l'outil **(22)** de façonnage comprend un galet **(65)** arrière de façonnage mobile en translation par rapport au galet **(25)** avant de façonnage suivant la direction **(11)** de travail, le galet **(65)** arrière de façonnage est disposé, suivant la direction **(11)** de travail, à l'opposé du galet **(25)** avant de façonnage par rapport au pion **(34)** de l'outil **(33)** d'appui.

7. Dispositif **(1c)** de formage selon la revendication précédente, **caractérisé en ce que** le moyen **(29)** de transfert comprend :
- une première branche **(66)** apte à être en contact avec le galet **(25)** avant de façonnage de l'outil **(22)** de façonnage au niveau du deuxième point **(32)** de contact ;
- une deuxième branche **(68)** apte à être en contact avec le galet **(65)** arrière de façonnage de l'outil **(22)** de façonnage au niveau d'un troisième point **(69)** de contact ;
- une troisième branche **(71)** apte à être en contact avec un premier chemin **(73)** du support **(3)** au niveau d'un quatrième point **(72)** de contact ;
la première branche **(66)** comprend une partie **(74)** oblique définissant un angle confondu avec le deuxième point **(32)** de contact, la partie **(74)** oblique est apte à être en contact avec un deuxième chemin **(76)** fixe par rapport à un axe **(44)** principal du support **(3)** au niveau d'un cinquième point **(75)** de contact.

8. Dispositif **(1c)** de formage selon l'une quelconque des revendications 6 et 7, **caractérisé en ce que** le galet **(25)** avant de façonnage et le galet **(65)** arrière de façonnage présentent une section en forme de T et **en ce que** le pion **(34)** présente une forme générale cylindrique, de sorte à former une bouche **(90)** au niveau d'un col **(80)** du produit **(2).**

9. Machine **(78)** comprenant :
- une mâchoire **(79),** configurée pour être solidaire du produit **(2)** et pour être mue le long d'une trajectoire présentant une forme en arc de cercle définie par la machine **(78)** ;
- un dispositif **(1c)** de formage selon l'une quelconque des revendications précédentes, le dispositif **(1c)** de formage étant mobile en rotation autour d'un axe **(44)** principal fixe par rapport à un bras **(81)** principal de la machine **(78)** ;
le palpeur **(9)** du dispositif **(1c)** de formage étant en contact avec la mâchoire **(79),** de telle sorte que le palpeur **(9)** suive la trajectoire définie par la machine **(78),** le moyen **(29)** de transfert du dispositif **(1c)** de formage définissant la distance séparant l'outil **(22)** de façonnage et le produit **(2),** le produit **(2)** présentant une section circulaire et ayant un axe de révolution sensiblement vertical.

10. Machine **(78)** selon la revendication précédente dépendant de la revendication 8, **caractérisée en ce qu'**elle comprend, en outre :
- un dispositif **(1a)** d'ébauche muni :
• d'un galet **(25)** avant de façonnage présentant une section comprenant deux segments **(83)** obliques, définissant un angle aigu, et un congé **(84)** au niveau de cet angle aigu, et
• d'un pion **(34)** comportant un pan **(85)** oblique, apte à former un évasement **(86)** au niveau du col **(80)** du produit **(2),** et
- un dispositif **(1b)** de préformage muni :
• d'un galet **(25)** avant de façonnage présentant une section comprenant deux segments **(83)** obliques, définissant un angle aigu, solidaires d'un segment **(87)** vertical, et
• d'un pion **(34)** présentant une forme cylindrique,
apte à former, à la suite du formage de l'évasement **(86)** et en amont du formage de la bouche **(90),** une épaule **(88)** et un cou **(89)** au niveau du col **(80)** du produit **(2).**

## Patentansprüche

1. Vorrichtung (1c) zum Formen zur Realisierung einer Operation auf einem Produkt (2) in Glasröhrenform, wobei diese Vorrichtung (1c) umfasst:
- einen Träger (3);
- ein Bearbeitungswerkzeug (22), das im Verhältnis zum Träger (3) gemäß einer Arbeitsrichtung (11) in Translation mobil ist;
- einen Taster (9), der in Bezug auf den Träger (3) gemäß der Arbeitsrichtung (11) in Translation mobil ist, wobei dieser Taster (9) zum Indexieren des Werkzeugs (22) zum Formen im Verhältnis zum Produkt (2) ausgestaltet ist;
- ein Stützwerkzeug (33), das mit einem Stift (34), einer Nocke (36) und einer Nockenfolge (37) versehen ist, wobei die Nocke (36) in Drehung um eine Stützachse (41) mobil ist, die im Verhältnis zum Taster (9) fest ist, wobei die Rolle (37) der Form der Nocke (36) derart folgt, dass die Entfernung, die den Stift (34) und das Werkzeug (22) zum Formen gemäß einer zur Arbeitsrichtung (11) lotrechten Stützrichtung (38) trennt, zum Variieren gebracht wird, wobei dieses Stützwerkzeug (33) zum Realisieren der Operation auf dem Produkt (2) mit dem Werkzeug (22) zum Formen ausgestaltet ist;
wobei diese Vorrichtung (1c) zum Formen **dadurch gekennzeichnet ist, dass** sie darüber hinaus ein Übertragungsmittel (29) einer Translationsbewegung des Tasters (9) in einer Translationsbewegung des Werkzeugs (22) zum Formen umfasst, wobei dieses Übertragungsmittel (29) in Drehung im Verhältnis zum Taster (9) um eine Übertragungsachse (30) mobil ist, die im Verhältnis zum Taster (9) fest ist, und ebenfalls im Verhältnis zum Werkzeug (22) zum Bearbeiten mobil ist, wobei dieses Übertragungsmittel (29) an einem ersten Kontaktpunkt (31), der mit der Übertragungsachse (30) zusammenfällt, mit dem Taster (9) und an einem zweiten Kontaktpunkt (32) mit dem Werkzeug (22) zum Bearbeiten in Kontakt ist, wobei die Entfernung, die den ersten Kontaktpunkt (31) und den zweiten Kontaktpunkt (32) trennt, in Abhängigkeit von der Verschiebung des Tasters (9) im Verhältnis zum Träger (3) variiert, wobei diese Entfernung von der Form des Übertragungsmittels (29) definiert ist.

2. Vorrichtung (1c) zum Formen gemäß dem voranstehenden Anspruch, **dadurch gekennzeichnet, dass** das Werkzeug (22) zum Formen eine vordere Rolle (25) zum Formen umfasst und der Taster (9) eine Indexierungsrolle (15), die gemäß der Arbeitsrichtung (11) zwischen dem Träger (3) und der vorderen Rolle (25) zum Formen umfasst.

3. Vorrichtung (1c) zum Formen gemäß dem voranstehenden Anspruch, **dadurch gekennzeichnet, dass** sie eine vorgezogene Position (16, 17) und eine zurückgezogene Position definiert, in der die Entfernungen gemäß der Arbeitsrichtung (11) und gemäß der Stützrichtung (38), die den Stift (34) des Stützwerkzeug (33) und die vordere Rolle (25) zum Formen des Werkzeugs (22) zum Formen trennen, kleiner sind als die Entfernungen jeweils gemäß der Arbeitsrichtung (11) und gemäß der Stützrichtung (38), die den Stift (34) und die vordere Rolle (25) zum Formen trennen, wenn die Vorrichtung (1c) zum Formen in der vorgezogenen Position (16, 17) ist.

4. Vorrichtung (1c) zum Formen gemäß irgendeinem der voranstehenden Ansprüche, **dadurch gekennzeichnet, dass** das Stützwerkzeug (33) in Translation gemäß der Stützrichtung (38) im Verhältnis zum Taster (9) mobil ist.

5. Vorrichtung (1c) zum Formen gemäß irgendeinem der voranstehenden Ansprüche, **dadurch gekennzeichnet, dass** sie einen Zylinder (55) umfasst, der fest mit dem Taster (9) und der Nocke (36) des Stützwerkzeugs (33) verbunden ist, wobei der Zylinder (55) ausgestaltet ist, um die Nocke (36) in Abhängigkeit von der Verschiebung des Tasters (9) im Verhältnis zum Träger (3) in Bewegung zu setzen.

6. Vorrichtung (1c) zum Formen gemäß irgendeinem der Ansprüche 2 bis 5, **dadurch gekennzeichnet, dass** das Werkzeug (22) zum Formen eine hintere Rolle (65) zum Formen umfasst, das in Translation im Verhältnis zur vorderen Rolle (25) zum Formen gemäß der Arbeitsrichtung (11) mobil ist, wobei die hintere Rolle (65) zum Formen gemäß der Arbeitsrichtung (11) gegenüber der vorderen Rolle (25) zum Formen im Verhältnis zum Stift (34) des Stützwerkzeugs (33) angeordnet ist.

7. Vorrichtung (1c) zum Formen gemäß dem voranstehenden Anspruch, **dadurch gekennzeichnet, dass** das Übertragungsmittel (29) umfasst:
- einen ersten Zweig (66), der geeignet ist, mit der vorderen Rolle (25) zum Formen des Werkzeugs (22) zum Formen an dem zweiten Kontaktpunkt (32) in Kontakt zu sein;
- einen zweiten Zweig (68), der geeignet ist, mit der hinteren Rolle (65) zum Formen des Werkzeugs (22) zum Formen an einem dritten Kontaktpunkt (69) in Kontakt zu sein;
- einen dritten Zweig (71), der geeignet ist, mit einem ersten Weg (73) des Trägers (3) an einem vierten Kontaktpunkt (72) in Kontakt zu sein;
wobei der erste Zweig (66) einen schrägen Teil (74) umfasst, der einen spitzen Winkel mit dem zweiten Kontaktpunkt (32) definiert, der schräge Teil (74) geeignet ist, mit einem zweiten Weg (76) in Kontakt zu sein, der im Verhältnis zu einer Hauptachse (44) des Trägers (3) an einem fünften Kontaktpunkt (75) fest ist.

8. Vorrichtung (1c) zum Formen gemäß irgendeinem der Ansprüche 6 und 7, **dadurch gekennzeichnet, dass** die vordere Rolle (25) zum Formen und die hintere Rolle (65) zum Formen einen T-förmigen Abschnitt aufweisen und dass der Stift (34) eine allgemeine zylindrische Form derart aufweist, dass eine Mündung (90) an einem Sattel (80) des Produkts (2) gebildet ist.

9. Maschine (78), umfassend:
- eine Klemmbacke (79), die ausgestaltet ist, um fest mit dem Produkt (2) verbunden zu sein und entlang einer Bahn bewegt zu sein, die eine von der Maschine (78) definierte kreisförmige Bogenform aufweist;
- eine Vorrichtung (1c) zum Formen gemäß irgendeinem der voranstehenden Ansprüche, wobei die Vorrichtung (1c) zum Formen in Drehung um eine Hauptachse (44) mobil ist, die im Verhältnis zu einem Hauptarm (81) der Maschine (78) mobil ist;
wobei der Taster (9) der Vorrichtung (1c) zum Formen mit der Klemmbacke (79) derart in Kontakt ist, dass der Taster (9) der von der Klemmbacke (78) definierten Bahn folgt, wobei das Übertragungsmittel (29) der Vorrichtung (1c) zum Formen die Entfernung definiert, die das Werkzeug (22) zum Formen und das Produkt (2) trennt, wobei das Produkt (2) einen kreisförmigen Abschnitt aufweist und eine deutlich vertikale Revolutionsachse hat.

10. Maschine (78) gemäß dem voranstehenden Anspruch, die von Anspruch 8 abhängt, **dadurch gekennzeichnet, dass** sie darüber hinaus umfasst:
- eine Rohteilvorrichtung (1a), die versehen ist mit:
* einer vorderen Rolle zum Formen, die einen Abschnitt aufweist, der zwei schräge Segmente (83), die einen spitzen Winkel definieren, und eine Ausrundung (84) an diesem spitzen Winkel umfasst, und
* einem Stift (34), der eine schräge Fläche (85) umfasst, die geeignet ist, eine Ausweitung (86) am Sattel (80) des Produkts (2) zu formen, und
- eine Vorrichtung (1b) zum Vorformen, die versehen ist mit:
* einer vorderen Rolle (25) zum Formen, die einen Abschnitt aufweist, der zwei schräge Segmente (83) umfasst, die einen spitzen Winkel definieren und mit einem vertikalen Segment (87) fest verbunden sind, und
* einen Stift (34), der eine zylindrische Form aufweist, der geeignet ist, im Anschluss an das Formen der Ausweitung (86) und vor dem Formen der Mündung (90) ein Ansatzstück (88) und einen Hals (89) am Sattel (80) des Produkts (2) zu formen.

## Claims

1. A forming device (1c) for performing an operation on a tubular-shaped glass product (2), this device (1c) comprising:
a support (3);
a shaping tool (22), translationally movable relative to the support (3) along a working direction (11);
a feeler (9), translationally movable relative to the support (3) along the working direction (11), this feeler (9) being configured to index the shaping tool (22) relative to the product (2);
an abutment tool (33) fitted with a pin (34), a cam (36) and a cam follower (37), the cam (36) being rotatably movable around a fixed abutment axis (41) relative to the feeler (9), the cam follower (37) following the shape of the cam (36), so as to vary the distance separating the pin (34) from the shaping tool (22) along an abutment direction (38) perpendicular to the working direction (11), this abutment tool (33) being configured to perform, with the shaping tool (22), the operation on the product (2);
this forming device (1c) being **characterised in that** it further comprises a means (29) for transferring a translation motion of the feeler (9) into a translation motion of the shaping tool (22), this transfer means (29) being rotatably movable, relative to the feeler (9), about a transfer axis (30) fixed relative to the feeler (9) and being also movable relative to the shaping tool (22), this transfer means (29) being in contact, at a first contact point (31) identical to the transfer axis (30), with the feeler (9) and, at a second contact point (32), with the shaping tool (22), the distance separating the first contact point (31) from the second contact point (32) varies depending on the movement of the feeler (9) relative to the support (3), this distance being defined by the shape of the transfer means (29).

2. The forming device (1c) according to the preceding claim, **characterised in that** the shaping tool (22) comprises a front shaping roller (25) and the feeler (9) comprises an indexing roller (15) disposed, along the working direction (11), between the support (3) and the front shaping roller (25).

3. The forming device (1c) according to the preceding claim, **characterised in that** it defines a forward position (16, 17) and a backward position (18) where the distances, along the working direction (11) and along the abutment direction (38), separating the pin (34) of the abutment tool (33) from the front shaping roller (25) of the shaping tool (22) are lower than the distances, along the working direction (11) and along the abutment direction (38), respectively, separating the pin (34) from the front shaping roller (25) when the forming device (1c) is in the forward position (16, 17).

4. The forming device (1c) according to any of the preceding claims, **characterised in that** the abutment tool (33) is translationally movable along the abutment direction (38) relative to the feeler (9).

5. The forming device (1c) according to any of the preceding claims, **characterised in that** it comprises a jack (55) integral with the feeler (9) and with the cam (36) of the abutment tool (33), the jack (55) being configured to move the cam (36) depending on the movement of the feeler (9) relative to the support (3).

6. The forming device (1c) according to any of claims 2 to 5, **characterised in that** the shaping tool (22) comprises a rear shaping roller (65) translationally movable relative to the front shaping roller (25) along the working direction (11), the rear shaping roller (65) is disposed, along the working direction (11), opposite to the front shaping roller (25) relative to the pin (34) of the abutment tool (33).

7. The forming device (1c) according to the preceding claim, **characterised in that** the transfer means (29) comprises:
- a first branch (66) able to be in contact with the front shaping roller (25) of the shaping tool (22) at the second contact point (32);
- a second branch (68) able to be in contact with the rear shaping roller (65) of the shaping tool (22) at a third contact point (69);
- a third branch (71) able to be in contact with a first path (73) of the support (3) at a fourth contact point (72);
the first branch (66) comprises a slanting part (74) defining an angle identical to the second contact point (32), the slanting part (74) being able to be in contact with a second path (76) fixed relative to a main axis (44) of the support (3) at a fifth contact point (75).

8. The forming device (1c) according to any of claims 6 to 7, **characterised in that** the front shaping roller (25) and the rear shaping roller (65) have a T-shaped cross-section and **in that** the pin (34) has a generally cylindrical shape, so as to form a mouth (90) at a throat (80) of the product (2).

9. A machine (78) comprising:
- a jaw (79), configured to be integral with the product (2) and to be moved along a trajectory having an arc of circle shape defined by the machine (78);
- a forming device (1c) according to any of the preceding claims, the forming device (1c) being rotatably movable about a fixed main axis (44) relative to a main arm (81) of the machine (78);
the feeler (9) of the forming device (1c) being in contact with the jaw (79), so that the feeler (9) follows the trajectory defined by the machine (78), the transfer means (29) of the forming device (1c) defining the distance separating the shaping tool (22) from the product (2), the product (2) having a circular cross-section and having a substantially vertical axis of revolution.

10. The machine (78) according to the preceding claim dependent on claim 8, **characterised in that** it further comprises:
- a roughing device (1a) fitted with:
• a front shaping roller (25) having a cross-section comprising two slanting segments (83), defining an acute angle, and a fillet (84) at this acute angle, and
• a pin (34) including a slanting face (85),
able to form a flare (86) at the throat (80) of the product (2), and
- a pre-forming device (1b) fitted with:
• a front shaping roller (25) having a cross-section comprising two slanting segments (83), defining an acute angle, integral with a vertical segment (87), and
• a pin (34) having a cylindrical shape, able to form, subsequent to forming the flare (86) and prior to forming the mouth (90), a shoulder (88) and a neck (89) at the throat (80) of the product (2).
